(19) **Europäisches Patentamt European Patent Office Office européen des brevets**

(11) **EP 1 643 490 B1**

(12) **EUROPEAN PATENT SPECIFICATION**

(45) Date of publication and mention of the grant of the patent:
**02.12.2009 Bulletin 2009/49**

(51) Int Cl.:
***G11B 5/41*** *(2006.01)* ***G11B 5/70*** *(2006.01)*

(21) Application number: **05021268.7**

(22) Date of filing: **29.09.2005**

(54) **Cleaning tape for magneto-resistive head**

Reinigungsband für magnetoresistiven Kopf

Bande de nettoyage pour tête magnétorésistive

(84) Designated Contracting States:
**DE FR GB**

(30) Priority: **30.09.2004 JP 2004288024**

(43) Date of publication of application:
**05.04.2006 Bulletin 2006/14**

(73) Proprietor: **FUJIFILM Corporation**
**Minato-ku**
**Tokyo (JP)**

(72) Inventor: **Ejiri, Kiyomi**
**Odawara-shi**
**Kanagawa (JP)**

(74) Representative: **HOFFMANN EITLE**
**Patent- und Rechtsanwälte**
**Arabellastrasse 4**
**81925 München (DE)**

(56) References cited:
**EP-A2- 1 271 521** **US-A- 4 652 958**
**US-A1- 2004 178 191**

Description

## FIELD OF THE INVENTION

This invention relates to a cleaning tape for magneto-resistive (MR) head.

## BACKGROUND OF THE INVENTION

Recording and reproduction by a magnetic recording device for video or computer applications are generally performed by contact sliding between a magnetic head and a magnetic recording medium, e.g., magnetic tape. If soiled with tape dust or surrounding dust, the magnetic head has reduced reproduction output and eventually fails to produce output. In order to restore the reduced reproduction output, a cleaning tape is used to remove the adherent dirt and dust from the surface of the magnetic head. The related art is disclosed, e.g., in JP-A-6-139531, JP-A-2003-281706, JP-A-2004-95182, and JP-A-2002-230727.

Magnetic recording density has been increasing every year. Unless a magnetic head and magnetic tape are in good contact, failure to achieve sufficient writing and reading would be experienced more frequently. To maintain a good head contact, a cleaning tape has come to be required to perform not only the head cleaning function but also a function to regulate the shape of a head to some extent. In particular, a magnetic head capable of high density recording at a shortest recording wavelength of 1 $\mu$m or less that has recently come into use suffers from interference with read performance by even a trace amount of dirt or dust adhered thereto.

With the ever increasing recording density, the head materials have changed from traditional ferrites to hard metals, such as Sendust, which are recently being replaced with MR elements made of less hard materials, such as Permalloy. Furthermore, while a head chip with a sharp tip as is used in helical scanning has conventionally been used, application of a flat head that is brought into contact with linear tape media over its whole width has been increasing. These heads has an MR element fitted into a small recess having a depth of several tens of nanometers in a high hardness ceramic substrate.

In order to clean an MR head used in high density magnetic recording systems uniformly and efficiently, a cleaning tape is required to have a uniform contact with the tape sliding surface of an MR head, to clean the surface of the MR element embedded in the small recess, and to have moderate abrasive effect so as not to wear the soft MR element.

Unused data recording tapes have been utilized as cleaning tape for LTO applications, but a cleaning operation with such tapes should be repeated a few times to remove tough, adherent debris because of their too smooth surface. Moreover, it is difficult to remove dirt from the surface of an MR element with the data recording tapes. Additionally, the data recording tapes come into non-uniform contact with the tape sliding surface of a flat head, resulting in unevenness of cleaning.

## SUMMARY OF THE INVENTION

An object of the present invention is to provide a cleaning tape with which an MR head of high density recording and reproducing devices can be cleaned uniformly and efficiently.

The present invention provides a cleaning tape for an MR head having a support and a cleaning layer containing powder and a binder on the support, the cleaning layer being adapted to be brought into contact with the MR head. The cleaning layer has a centerline average surface roughness Ra of 10 to 60 nm. The cleaning tape has an absolute value of curvature of 3.0 mm or less for a length of 1 m.

In a preferred embodiment of the cleaning tape, the MR head to be cleaned is for reading and writing signals having a recording wavelength of 1 $\mu$m or shorter.

In another preferred embodiment of the cleaning tape, the cleaning layer has a nonmagnetic layer on the support and a magnetic layer on the nonmagnetic layer. The magnetic layer contains nonmagnetic powder having an average particle size of 0.3 $\mu$m or smaller and a Mohs hardness of 6 or higher and has a thickness of 0.20 $\mu$m or smaller.

The cleaning tape of the present invention with its surface roughness specified efficiently cleans dirt from not only the high hardness ceramic surface of an MR head but the surface of the MR element positioned in a small recess by its surface roughness (waviness). During cleaning, the cleaning tape is always in contact with the ceramic surface and intermittently comes into contact with the MR element so that the MR element is prevented from being worn.

The cleaning tape of the present invention with its curvature controlled within a specific range has reduced unevenness in running tension in the tape width direction thereby achieving uniform dirt removal. This effect is pronounced when the MR head is for writing and reading signals having a recording wavelength of 1 $\mu$m or shorter.

Where the cleaning layer has a dual layer structure composed of a lower nonmagnetic layer and an upper magnetic layer having a thickness of 0.2 $\mu$m or smaller and containing nonmagnetic powder having an average particle size of 0.3 $\mu$m or smaller and a Mohs hardness of 6 or higher, the nonmagnetic powder forms projections with a moderate height, bringing about enhanced cleaning effects. The upper layer, being magnetic, is capable of recording information if desired.

## BRIEF DESCRIPTION OF THE DRAWINGS

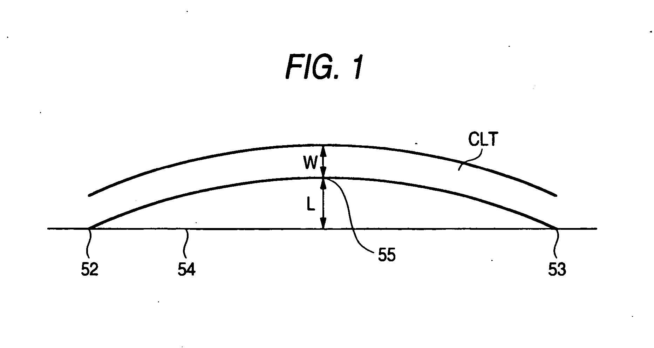

Fig. 1 illustrates measurement of a cleaning tape curvature.

## DETAILED DESCRIPTION OF THE INVENTION

The cleaning tape of the invention has a cleaning layer provided on a nonmagnetic support. The cleaning layer contains powder and a binder. The cleaning layer has a centerline average surface roughness Ra of 10 to 60 nm, preferably 10 to 45 nm, still preferably 10 to 35 nm. With an Ra smaller than 10 nm, sufficient cleaning effects are not exerted. A surface roughness Ra exceeding 60 nm causes scratches or wear of an MR head.

The surface roughness Ra as referred to in the present invention denotes the one measured with a white light 3D surface profiler NV-5000 (from Zygo Corp.) under the following conditions: objective lens: 20X; intermediate lens: 1.0X; measurement area: 345 $\mu$m x 257 $\mu$m. After cylindrical correction and slope correction, the image data were processed to calculate Ra.

Ra is controllable through various means. For example, a desired Ra is obtained by controlling or selecting the surface roughness of the support, the thickness of the cleaning layer, the particle size of the powder used in the cleaning layer, and the surface treating conditions (such as the linear pressure and the roll surface conditions in calendering) . In this connection, a support with an Ra of 5 to 80 nm, preferably 10 to 65 nm, on the cleaning layer side can be used, and powders with an average particle size of 0.02 to 1 $\mu$m, preferably 0.05 to 0.6 $\mu$m, can be used in the cleaning layer. The powders may be granular, needle-like, tabular or cubic. The surface roughness Ra on the cleaning layer and that on the reverse side of the cleaning tape may be either the same or different.

The cleaning tape of the invention has an absolute value of curvature of 3.0 mm or less for a length of 1 m. The terminology "curvature" as used herein denotes a maximum amount of curvature of a cleaning tape having a length of 1 m along the longitudinal direction of the tape, which is measured as follows. Fig. 1 is referred to. A cleaning tape CLT with a width W and a length of 1 m is placed on a flat table with no tension applied and allowed to stand in a measuring atmosphere (23°C, 50% RH) for 24 hours. After the standing, the largest distance L (mm) of the curved tape from the line connecting both ends of the tape 52 and 53 (the maximum height of the arc formed by the tape) is measured with a comparator, etc. The distance L is taken as a curvature as referred to in the present invention. While the cleaning tape illustrated in Fig. 1 curves upward, the same definition applies when the curve is downward. Assuming that the upward curve shown in Fig. 1 as being in a positive (plus) side, the downward curve is supposed to be in a negative (minus) side. Therefore, the curvature is represented in terms of an absolute value. An absolute value of curvature of 3 mm or less has the same meaning as within a range of from -3 mm to +3 mm.

The curvature of the cleaning tape can be controllable through various means. For example, the curvature is controlled by winding a tape (after slitting) on a tapered hub and heat treated as wound.

The cleaning tape of the invention is used to clean an MR head having an MR element for reading. The cleaning tape exerts a particularly favorable cleaning effect when applied to an MR head having an MR element embedded in a small, 10 to 50 nm deep recess of a ceramic substrate, e.g., $Al_2O_3$/TiC.

An MR head to which the cleaning tape of the invention is used preferably is for high density recording at a recording wavelength of 1 $\mu$m or shorter, preferably 0.02 to 0.7 $\mu$m, still preferably 0.05 to 0.5 $\mu$m. The cleaning tape is preferably used on a magnetic recording and reproducing device having a recording track width of 30 $\mu$m or narrower, still preferably 2 to 20 $\mu$m. The above preference for the application of the cleaning tape of the invention is based on the fact that the spacing loss due to head contamination is outstanding under the recited conditions of recording wavelength and track width.

The structure of the cleaning tape according to the present invention will be described in greater detail.

The cleaning layer provided on a support is made mainly of a dispersion of powder, such as a fine inorganic powder, in a binder. The fine inorganic powder may be either magnetic or nonmagnetic. The cleaning layer has a single layer structure or a multilayer structure. The cleaning layer is provided as a layer that is to be brought into contact with an MR head to be cleaned.

The cleaning layer is provided to give a support a desired function not possessed by the support. For example, a nonmagnetic powder is incorporated into the cleaning layer to impart a cleaning function, an electrically conductive powder is incorporated to impart an antistatic function, or a magnetic powder is incorporated to impart magnetic recording capability.

The cleaning layer can further contain a lubricant to have a controlled frictional coefficient.

The layer structure of the cleaning tape of the invention includes a support having a single cleaning layer which may be either magnetic similarly to data tape or nonmagnetic or a double-layered cleaning layer composed of a lower nonmagnetic layer and an upper magnetic layer on one side thereof and a backcoat layer on the other side thereof.

The cleaning tape preferably has a total thickness of 5 to 30 $\mu$m, still preferably 8 to 20 $\mu$m.

The thickness of the cleaning layer, whether single-layered or double-layered, is preferably of 0.1 to 5.0 $\mu$m, still preferably 0.5 to 3.0 $\mu$m. The thickness of the support is preferably 3 to 25 $\mu$m, still preferably 6 to 20 $\mu$m. Where the cleaning layer has a double-layered structure, the thickness of the lower nonmagnetic layer is preferably 0.5 to 4.5 $\mu$m, still preferably 0.5 to 2.5 $\mu$m, and that of the upper magnetic layer is preferably 0.03 to 0.2 $\mu$m, still preferably 0.03 to 0.15 $\mu$m.

To secure better head contact over the cleaning tape width, the cupping of the cleaning tape is preferably not more than 1 mm, still preferably not more than 0.6 mm, per 1/2 in. width. The terminology "cupping" as used herein means a curvature in the width direction of the cleaning tape, which is measured as follows. A length of 1 m cut out of a tape is conditioned in a measuring atmosphere (23°C and 50% RH) for 24 hours. A length of 300 mm is cut out from the lengthwise middle of the cut tape and placed on a flat table with its cleaning layer (the magnetic layer where the cleaning layer has a double-layer structure) up for 3 hours. After the standing, the width W2 of a 100 mm long middle portion of the tape is measured with a comparator. Then, a slide glass is put on the tape, and the width W1 of the tape is measured. The cupping is quantitatively represented by formula:

$$\texttt{Cupping = (W2/2)tan(S}^{1/2}\texttt{)}$$

where $S = 10x\{1-(1.2W2/W1-0.2)^{1/2}\}$.

The cleaning tape preferably has a surface resistivity of $10^{10}$ $\Omega$/sq. or less, still preferably $10^9$ $\Omega$/sq. or less. With the controlled surface resistivity, the cleaning tape exhibits satisfactory antistatic properties to avert electrostatic damage to an MR head.

The surface resistivity of the cleaning tape can be so controlled by, for example, adding a conductive powder such as carbon black to at least one of the lower and the upper layers of the cleaning layer and the backcoat layer. For this purpose, carbon black can be added in an amount of 1 to 20 parts by weight per 100 parts by weight of the binder of the layer where it is added.

The cleaning tape of the invention preferably has a cleaning layer composed of a lower nonmagnetic layer containing a nonmagnetic inorganic powder and a binder and an upper magnetic layer containing a ferromagnetic powder and a binder on one side of a support and a backcoat layer on the other side of the support. In what follows, the cleaning tape of the invention will be described in detail with particular reference to the one having such a double layered structure.

The binders that can be used in the upper magnetic layer and the lower nonmagnetic layer include conventionally known thermoplastic resins, thermosetting resins and reactive resins, and mixtures thereof. Thermoplastic resins used as a binder generally have a glass transition temperature of -100° to 150°C, an number average molecular weight of 1,000 to 200, 000, preferably 10,000 to 100,000, and a degree of polymerization of about 50 to 1000.

Such thermoplastic resins include homo- or copolymers containing a unit derived from vinyl chloride, vinyl acetate, vinyl alcohol, maleic acid, acrylic acid, an acrylic ester, vinylidene chloride, acrylonitrile, methacrylic acid, a methacrylic ester, styrene, butadiene, ethylene, vinyl butyral, vinyl acetal, a vinyl ether, etc.; polyurethane resins, and various rubber resins. Useful thermosetting or reactive resins include phenolic resins, epoxy resins, thermosetting polyurethane resins, urea resins, melamine resins, alkyd resins, reactive acrylic resins, formaldehyde resins, silicone resins, epoxy-polyamide resins, polyester resin/isocyanate prepolymer mixtures, polyester polyol/polyisocyanate mixtures, and polyurethane/polyisocyanate mixtures. For the details of these resin binders, *Plastic Handbook,* Asakura Shoten (publisher) can be referred to. Known electron beam (EB) -curing resins can also be used in each layer. The details of the EB-curing resins and methods of producing them are described in JP-A-62-256219.

The above-recited binder resins can be used either individually or as a combination thereof. A preferred binder formulation is a combination of (1) at least one vinyl chloride resin selected from polyvinyl chloride, a vinyl chloride-vinyl acetate copolymer, a vinyl chloride-vinyl acetate-vinyl alcohol copolymer, and a vinyl chloride-vinyl acetate-maleic anhydride copolymer, (2) a polyurethane resin, and (3) polyisocyanate.

The polyurethane resin includes those of known structures, such as polyester polyurethane, polyether polyurethane, polyether polyester polyurethane, polycarbonate polyurethane, polyester polycarbonate polyurethane, and polycaprolactone polyurethane. In order to ensure dispersing capabilities and durability according to necessity, it is preferred to introduce into the above-recited binder resins at least one polar group by copolymerization or through addition reaction, the polar group being selected from -COOM, -SO$_3$M, -OSO$_3$M, -P=O (OM)$_2$, -O-P=O (OM)$_2$ (wherein M is a hydrogen atom or an alkali metal base), -OH, -NR$_2$, -N$^+$R$_3$ (wherein R is a hydrocarbon group), an epoxy group, -SH, -CN, etc. The amount of the polar group to be introduced is $10^{-1}$ to $10^{-8}$ mol/g, preferably $10^{-2}$ to $10^{-6}$ mol/g.

The number of hydroxyl groups per molecule of the polyurethane resin is preferably 3 to 20, still preferably 4 or 5 . Polyurethane resin containing 2 or fewer hydroxyl groups per molecule has reduced reactivity with the polyisocyanate curing agent to provide a cured film insufficient in film strength and durability. Polyurethane resin containing more than 20 hydroxyl groups per molecule tends to have reduced solvent solubility and reduced dispersing ability. In order to adjust the hydroxyl group content in the polyurethane resin, a polyhydroxy compound having three or more hydroxyl groups can be used to synthesize the polyurethane resin. Examples of the polyhydroxy compound include trimethylolethane, trimethylolpropane, trimellitic anhydride, glycerol, pentaerythritol, hexanetriol; tri- or higher functional branched polyester obtained from a polyester polyol prepared from a dibasic acid and the above-recited polyhydroxy compound as a polyol component as disclosed in JP-B-6-64726; and a tri- or higher functional polyether esters. Of the tri- or higher functional compounds preferred are trifunctional ones. Tetra- or higher functional compounds can cause gelation with progress of the reaction.

The polyisocyanate that can be used in the binder formulation includes tolylene diisocyanate, 4,4'-diphenylmethane diisocyanate (MDI), hexamethylene diisocyanate, xylylene diisocyanate, naphthylene-1,5-diisocyanate, o-toluidine diisocyanate, isophorone diisocyanate, and triphenylmethane triisocyanate. Further included are reaction products between these isocyanate compounds and polyols and polyisocyanates produced by condensation of the isocyanates.

The amount of the binder in the magnetic or nonmagnetic layer is 5% to 50% by weight, preferably 10% to 30% by weight, based on the ferromagnetic powder or the nonmagnetic inorganic powder, respectively. Where a vinyl chloride resin, a polyurethane resin, and polyisocyanate are used in combination, their amounts are selected from a range of 5% to 30% by weight, a range of 2% to 20% by weight, and a range of 2% to 20% by weight, respectively. In case where head corrosion by a trace amount of released chlorine is expected to occur, a combination of only polyurethane and polyisocyanate can be used.

When the cleaning layer has a double-layered structure (a magnetic layer and a nonmagnetic layer), the binder formulation can be, or rather should be, designed for each of the layers in terms of the total binder content, the proportions of a vinyl chloride resin, a polyurethane resin, polyisocyanate, and other binder resins, the molecular weight of each resin, the amount of the polar group introduced, and other physical properties of the resins. For the optimization, known techniques relating to a nonmagnetic/magnetic multilayer structure can be utilized. For example, to increase the binder content of the magnetic layer is effective to reduce surface scratches, or to increase the binder content of the nonmagnetic layer is effective to increase flexibility.

The ferromagnetic powder that can be used in the magnetic layer includes ferromagnetic alloy powder made mainly of $\alpha$-Fe, magnetic iron oxide powder, and hexagonal ferrite powder. Ferromagnetic alloy powder mainly comprising $\alpha$-Fe is particularly preferred. Needle-like ferromagnetic powder particles usually have a length of 20 to 200 nm, preferably 30 to 150 nm, still preferably 30 to 100 nm. Tabular ferromagnetic powder particles usually have a plate diameter of 15 to 50 nm, preferably 20 to 45 nm. The ferromagnetic powder may contain, in addition to prescribed atoms, Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, etc. Ferromagnetic powders containing at least one of Al, Si, Ca, Y, Ba, La, Nd, Co, Ni, and B in addition to $\alpha$-Fe, particularly those containing at least one of Co, Al, and Y in addition to $\alpha$-Fe are preferred.

The ferromagnetic alloy powder may contain a small amount of a hydroxide or an oxide. The ferromagnetic alloy powder can be prepared by known processes including reduction of a composite organic acid complex salt (mainly an oxalate) with a reducing gas (e.g., hydrogen) ; reduction of iron oxide with a reducing gas (e.g., hydrogen) into Fe or Fe-Co particles; pyrolysis of a metal carbonyl compound; reduction of a ferromagnetic metal by adding a reducing agent (e.g., sodium borohydride, a hypophosphite or hydrazine) to an aqueous solution of the ferromagnetic metal; and vaporization of a metal in a low-pressure inert gas. The resulting ferromagnetic alloy powder may be subjected to a known slow oxidation treatment including immersion in an organic solvent followed by drying; immersion in an organic solvent, bubbling an oxygen-containing gas through the solvent to form an oxide film, followed by drying; and forming an oxide film in an atmosphere having a controlled oxygen to inert gas ratio without using an organic solvent.

The hexagonal ferrite powder that can be used in the magnetic layer includes barium ferrite, strontium ferrite, lead ferrite, and calcium ferrite, and their doped compounds, such as Co-doped ferrites. Specific examples are barium ferrite and strontium ferrite of magnetoplumbite type; magnetoplumbite type ferrites coated with spinel; and barium ferrite and strontium ferrite of magnetoplumbite type containing a spinel phase in parts. These ferrites may contain additional elements, such as Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge, and Nb. Usually, ferrites doped with Co-Ti, Co-Ti-Zr, Co-Ti-Zn, Ni-Ti-Zn, Nb-Zn-Co, Sb-Zn-Co, Nb-Zn, etc. can be used.

The magnetic layer preferably contains nonmagnetic powder having an average particle size of 0.3 $\mu$m or smaller, preferably 0.03 to 0.3 $\mu$m, still preferably 0.05 to 0.25 $\mu$m, and a Mohs hardness of 6 or higher. Examples of such nonmagnetic powder include $\alpha$-alumina having an $\alpha$-phase content of 90% or more, $\beta$-alumina, silicon carbide, chromium oxide, cerium oxide, $\alpha$-iron oxide, corundum, artificial diamond, silicon nitride, silicon carbide, titanium carbide, titanium oxide, silicon dioxide, and boron nitride. These powders can be used either individually or as a mixture thereof or as a composite thereof (an abrasive surface treated with another) . Existence of impurity compounds or elements, which are sometimes observed in these powders, will not affect the effect as long as the content of the main component is 90% by weight or higher. The nonmagnetic powder preferably has a tap density of 0.3 to 2 g/cc, a water content of 0.1% to 5% by weight, a pH of 2 to 11, and a specific surface area of 1 to 30 m$^2$/g . The powder particles may be needle-like, spherical or cubic. Angular grains are preferred for high abrasive properties.

Examples of commercially available nonmagnetic powders which can be used in the invention are AKP- 20, AKP-30, AKP-50, and HIT-50 from Sumitomo Chemical Co . , Ltd.; G-5, G-7, and S-1 from Nippon Chemical Industrial Co. , Ltd. ; and TF-100, TF-140, 100ED, and 140ED from Toda Kogyo Corp. The nonmagnetic powder can be used in not only the magnetic layer but the nonmagnetic layer. The kinds, amounts, and combination of the nonmagnetic powders can be varied between the layers. The nonmagnetic powder may previously be dispersed in a binder before being formulated into a coating composition.

The nonmagnetic powder is used in an amount of 3% to 40% by weight, preferably 5% to 30% by weight, based on the magnetic powder.

The average particle size of the nonmagnetic powder is preferably decided in connection with the thickness of the magnetic layer thereby to form projections of optimum height on the magnetic layer to exhibit enhanced cleaning effects. The average particle size of the nonmagnetic powder is preferably 80% to 180% of the thickness of the magnetic layer.

The inorganic powder that can be used in the nonmagnetic layer is nonmagnetic powder selected from inorganic compounds including metal oxides, metal carbonates, metal sulfates, metal nitrides, metal carbides, and metal sulfides. Carbon black can be incorporated into the nonmagnetic layer to obtain a desired micro Vickers hardness as well as to produce known effects, i.e., reduction of surface resistivity Rs and reduction of light transmission. It is possible to obtain a lubricant storage effect by incorporating carbon black into the lower layer. Useful carbon black species include furnace black for rubber, thermal black for rubber, carbon black for colors, and acetylene black. The above-described characteristics of the carbon black should be optimized in accordance with the desired effects. A combined use of carbon black species having different characteristics may produce better results. The nonmagnetic layer can also contain organic powder. With respect to the lubricants, dispersants, additives, solvents, methods of dispersing, and the like, known techniques as for a magnetic layer apply.

Additives that can be used in the magnetic and the nonmagnetic layers include those producing abrasive effects, lubricating effects, antistatic effects, dispersing effects, plasticizing effects, and the like. Specific examples of useful additives are described in WO 98/35345.

Useful lubricants include monobasic fatty acids having 10 to 24 carbon atoms and their metal (e.g. , Li, Na, K or Cu) salts, mono-, di- or triesters between monobasic fatty acids having 10 to 24 carbon atoms and any one of mono- to hexahydric alcohols having 2 to 12 carbon atoms, fatty acid esters of poly(alkylene oxide) monoalkyl ethers, and fatty acid amides having 8 to 22 carbon atoms. The fatty acids and the alcohols may be saturated or unsaturated and straight-chain or branched.

Examples of the fatty acids are capric acid, caprylic acid, lauric acid, myristic acid, palmitic acid, stearic acid, behenicacid, oleicacid, elaidicacid, linoleicacid, linolenic acid, and isostearic acid. Examples of the esters are butyl stearate, octyl stearate, amyl stearate, isooctyl stearate, butyl myristate, octyl myristate, butoxyethyl stearate, butoxydiethyl stearate, 2-ethylhexylstearate, 2-octyldodecyl palmitate, 2-hexyldodecyl palmitate, isohexadecyl stearate, oleyl oleate, dodecyl stearate, tridecyl stearate, oleyl erucate, neopentyl glycol didecanoate, and ethylene glycol dioleate.

The backcoat layer preferably contains carbon black and inorganic powder. The binder and additive formulations used to form the magnetic and the nonmagnetic layers also apply to the backcoat layer formation. The thickness of the backcoat layer is preferably 0.1 to 1.0 μm, still preferably 0.4 to 0.6 μm.

The support that can be used in the cleaning tape is preferably a nonmagnetic flexible support. Known films can be used, including polyesters (e.g., polyethylene terephthalate and polyethylene naphthalate), polyolefins, cellulose triacetate, polycarbonate, aromatic or aliphatic polyamide, polyimide, polyamide-imide, polysulfone, polyaramid, and polybenzoxazole. In particular, a polyethylene naphthalate film or a polyimide film is preferred. The support may previously be subjected to a surface treatment, such as a corona discharge treatment, a plasma treatment, a treatment for easy adhesion, a heat treatment, and a cleaning treatment. The support suitably has an elastic modulus of 3.5 to 20 GPa, preferably 4 to 15 GPa, in both the longitudinal direction and the transverse direction.

The nonmagnetic lower layer and the magnetic upper layer are formed by coating the support (web) with the respective coating compositions prepared by dissolving or dispersing the above-described components in an organic solvent either by wet-on-wet application (the magnetic coating composition is applied immediately after the nonmagnetic coating composition while the latter is wet) or wet-on-dry application (the magnetic coating composition is applied after the nonmagnetic coating layer dries)After drying the coating layer, the coated web is subjected to magnetic orientation, calendered, and slit to width.

## EXAMPLES

The present invention will now be illustrated in greater detail with reference to Examples, but it should be understood that the invention is not construed as being limited thereto. Unless otherwise noted, all the parts and percents are by weight.

EXAMPLE 1

| | | | |
|---|---|---|---|
| (1) | Formulation of coating composition for upper layer Ferromagnetic metal powder (Hc: 191 kA/m (2400 Oe) ; $S_{BET}$: 62 m$^2$/g; crystallite size: 11 nm; σs: 117 A-m$^2$ /kg; average length: 45 nm; average acicular ratio:5; pH: 9.3; Co/Fe=25 atm%; Al/Fe=7 atm%; Y/Fe=12 atm%) 100 parts Vinyl chloride copolymer (MR-110 from Zeon Corp. ; -SO$_3$Na content: 5x10$^{-6}$ eq/g; degree of polymerization: 350; epoxy content: 3.5% in terms of monomer unit) | | 10 parts |
| | Polyester polyurethane resin (neopentyl glycol/caprolactone polyol/MDI=0.9/2.6/1 by weight; -SO$_3$Na content: 1x10$^{-4}$ eq/g) | | 10 parts |
| | Alpha-alumina (average particle size: 0.2 μm; Mohs hardness: 9) | | 10 parts |
| | Carbon black (average particle size: 0.10 μm) | | 1 part |
| | Butyl stearate | | 1.5 parts |
| | Stearic acid | | 0.5 parts |
| | Methyl ethyl ketone | | 150 parts |
| | Cyclohexanone | | 50 parts |
| | Toluene | | 40 parts |
| (2) | Formulation of coating composition for lower layer Nonmagnetic powder (needle-like α-iron oxide; $S_{BET}$: 58 m$^2$/g; average length: 0.15 μm; average acicular ratio: 7.5) | | 80 parts |
| | Carbon black (average primary particle size: 16 nm; oil (DBP) absorption: 80 ml/100 g: pH: 8.0; $S_{BET}$: 250 m$^2$/g) | | 20 parts |
| | Vinyl chloride copolymer (MR-110, from Zeon Corp.) | | 12 parts |
| | Polyester polyurethane resin (neopentyl glycol/caprolactone polyol/MDI=0.9/2.6/1 by weight; -SO$_3$Na content: 1x1o$^{-4}$ eq/g) | | 5 parts |
| | Butyl stearate | | 1.06 parts |
| | Stearic acid | | 1.18 parts |
| | Methyl ethyl ketone | | 150 parts |
| | Cyclohexanone | | 50 parts |
| | Toluene | | 40 parts |

The components of each formulation above were kneaded in a continuous kneader and dispersed in a sand mill. To each of the resulting mixtures were added 5 parts of polyisocyanate (Coronate L, from Nippon Polyurethane Industry Co., Ltd.) and then 40 parts of methyl ethyl ketone, followed by filtration through a filter with an average opening size of 1 μm to prepare a coating composition for upper layer and a coating composition for lower layer.

| | | | |
|---|---|---|---|
| (3) | Formulation of coating composition for backcoat layer Fine carbon black (BP-800 from Cabot Corp.; average particle size: 17 nm) | | 100 parts |
| | Coarse carbon black (thermal black from Cancarb Ltd.; average particle size: 270 nm) | | 10 parts |
| | Alpha-alumina (inorganic hard powder; average particle size: 200 nm; Mohs hardness: 9) | | 5 parts |
| | Nitrocellulose resin | | 140 parts |
| | polyurethane resin | | 15 parts |
| | Polyester resin | | 5 parts |
| | Dispersant (copper oleate) | | 5 parts |
| | Copper phthalocyanine | | 5 parts |
| | Precipitated barium sulfate (BF-1 from Sakai Chemical Industry Co., Ltd.; average particle size: 50 nm; Mohs hardness: 3) | | 5 parts |
| | Methyl ethyl ketone | | 1200 parts |

(continued)

| | |
|---|---|
| Butyl acetate | 300 parts |
| Toluene | 600 parts |

The components listed above were kneaded in a continuous kneader and dispersed in a sand mill. To the dispersion were added 40 parts of polyisocyanate (Coronate L, from Nippon Polyurethane Industry Co. , Ltd.) and then 1000 parts of methyl ethyl ketone, followed by filtration through a filter with an average opening size of 1 $\mu$m to prepare a coating composition for backcoat layer.

(4) Preparation of cleaning tape

The base film (support) was a polyethylene terephthalate film of continuous length having a thickness of 14.5 $\mu$m, a Young' s modulus of 500 kg/mm$^2$ (4.9 GPa) in both MD and TD; centerline average surface roughness Ra of 35 nm on the cleaning layer side and of 36 nm on the backcoat layer side.

The coating compositions for the lower layer and for the upper layer were simultaneously applied to the support to a dry thickness of 1.4 $\mu$m and 0.1 $\mu$m, respectively. While the upper layer was wet, the coated web was subjected to a magnetic orientation treatment using a cobalt magnet having a magnetic power of 300 mT and a solenoid having a magnetic power of 150 mT, followed by drying to form a double-layered cleaning layer.

The coating composition for backcoat layer was applied to the opposite side of the support to a dry thickness of 0.5 $\mu$m and dried to form a backcoat layer. There was obtained a web in roll form having a double-layered cleaning layer on one side and a backcoat layer on the other side. The web was calendered on a calender machine composed of heated metal rolls (at 90°C) and thermosetting resin-covered elastic rolls under a linear pressure of 300 kg/cm (294 kN/m). The web in roll form was then heat treated at 50°C for 48 hours and slit into 1/2 in. width. The resul ting cleaning tape had a thickness of 16.5 nm, an Ra of 18 nm on the cleaning layer, an Ra of 30 nm on the backcoat layer, and a curvature of 0.5 mm.

(5) Preparation of cleaning tape cartridge

The 1/2 in. cleaning tape with a length of 300 m was wound into an Ultrium 2 cartridge.

(6) Evaluation of cleaning tape cartridge

The cleaning tape cartridge was evaluated as follows. The results obtained are shown in Table 1 below.

(a) Cleaning performance
An Ultrium 2 magnetic tape cartridge A available from Fuji Photo Film Co., Ltd. was inserted into an IBM Ultrium 2 drive having an MR head. Signals were recorded on the magnetic tape at a recording wavelength of 0.4 $\mu$m and reproduced. The reproduction output was measured at the 0 ch and the 7 ch (the uppermost and the lowermost parts of the head module) (initial output). A cartridge B for creating head contamination (hereinafter described) was then run on the drive once (forward and backward) to create head contamination. The recorded Ultrium 2 magnetic tape cartridge A was run on the drive with the contaminated head to measure the output (output before cleaning). The cleaning tape cartridge C prepared above was run once (forward and backward), and the cartridge A was again run to measure the output (output after cleaning). The difference (dB) between the initial output and the output after cleaning is taken as a measure of cleaning effects. The difference is ideally zero dB. A reduction in output by up to 2 dB (a difference of -2 dB) is acceptable. Table 1 also shows the difference between the initial output and the output before cleaning.
The cartridge B for creating head contamination was prepared as follows. A magnetic tape was prepared in the same manner as for the cleaning tape of the invention, except that the abrasive was excluded from the formulation of the magnetic layer and that a polyethylene naphthalate film having a thickness of 6.8 $\mu$m and an Ra of 5 nm was used as a support. The coated web was calendered and slit in the same manner as for the cleaning tape, and the tape with a length of 609 m was wound into an Ultrium 2 cartridge.
(b) Damage to MR element
The MR element after the cleaning operation was inspected for scratches, residual adherent debris, corrosion, and the like under an optical microscope at a magnification of 800 times.
(c) Pole tip recession (PTR) measurement
A PTR (a level difference between the sliding surface and the recess) of the MR head was measured with an AFM before tape running and after cleaning. The difference, $\Delta$PTR, is taken as a measure of head wear. A $\Delta$PTR within

20 nm is acceptable.

EXAMPLE 2

A cleaning tape was prepared in the same manner as in Example 1, except that the support had an Ra of 60 nm on the cleaning layer side and 65 nm on the opposite side and that the resulting cleaning tape was heat treated as wound around a tapered hub to have a curvature of 2.5 mm.

EXAMPLE 3

A cleaning tape was prepared in the same manner as in Example 1, except that the support had an Ra of 10 nm on the cleaning layer side and 15 nm on the opposite side and that the resulting cleaning tape was heat treated as wound around a tapered core to have a curvature of 1.5 nm.

EXAMPLE 4

A cleaning tape was prepared in the same manner as in Example 1, except that the calender roll temperature was 50°C .

EXAMPLE 5

A cleaning tape was prepared in the same manner as in Example 1, except that the particle size of the $\alpha$-alumina (nonmagnetic powder) used in the magnetic layer was changed to 0.25 $\mu$m and the thickness of the magnetic layer was changed to 0.15 $\mu$m.

EXAMPLE 6

A cleaning tape was prepared in the same manner as in Example 1, except that the particle size of the $\alpha$-alumina (nonmagnetic powder) used in the magnetic layer was changed to 0.35 $\mu$m and the thickness of the magnetic layer was changed to 0.23 $\mu$m.

EXAMPLE 7

The cleaning tape of Example 3 was evaluated in the same manner as in Example 1, except for changing the recording wavelength to 1.6 $\mu$m.

COMPARATIVE EXAMPLE 1

An unused Ultrium 2 data tape was tested for use as a cleaning tape.

COMPARATIVE EXAMPLE 2

The cleaning tape prepared in Example 1 was heat treated as wound around a tapered hub to prepare a cleaning tape having a curvature of 3.3 mm.

COMPARATIVE EXAMPLE 3

A cleaning tape was prepared in the same manner as in Example 1, except that the support had an Ra of 60 nm on the cleaning layer side and that the calendering was not conducted.

TABLE 1

| | Ra (nm) | Curvature (mm) | Recording Wave-length ($\mu$m) | Magnetic Layer Thickness ($\mu$m) | Abrasive Grain Particle Size ($\mu$m) | Output Difference* (0/7 ch) (dB) | | Damage to MR Element | $\Delta$PTR (nm) |
|---|---|---|---|---|---|---|---|---|---|
| | | | | | | Before Cleaning | After Cleaning | | |
| Example 1 | 18 | 0.5 | 0.4 | 0.1 | 0.2 | -8.5/-7.2 | -0.3/-0.1 | none | 3 |
| Example 2 | 52 | 2.5 | 0.4 | 0.1 | 0.2 | -9.3/-8.0 | -0.1/-1.3 | 3 nm deep scratch | 15 |
| Example 3 | 11 | 1.5 | 0.4 | 0.1 | 0.2 | -7.9/-8.9 | -0.8/-1.7 | none | 0 |
| Example 4 | 38 | 1.0 | 0.4 | 0.1 | 0.2 | -8.4/-9.0 | -0.2/-0.3 | none | 10 |
| Example 5 | 21 | 1.2 | 0.4 | 0.15 | 0.25 | -8.0/-7.8 | -0.3/-0.6 | none | 8 |
| Example 6 | 19 | 0.8 | 0.4 | 0.23 | 0.35 | -9.0/-8.1 | -1.2/-1.6 | 3 nm deep scratch | 17 |
| Example 7 | 11 | 1.5 | 1.6 | 0.1 | 0.2 | -1.2/-1.7 | 0/0 | none | 0 |
| Comp. Example 1 | 5 | 0.7 | 0.4 | 0.22 | 0.3 | -9.1/-8.7 | -5.1/-3.2 | residual adherent debris on the entire surface | 0 |
| Comp. Example 2 | 18 | 3.3 | 0.4 | 0.1 | 0.2 | -8.0/-8.3 | -0.5/-3.8. | residual adherent debris on the 7 ch | 3 |
| Comp. Example 3 | 65 | 0.5 | 0.4 | 0.1 | 0.2 | -7.8/-8.2 | -4.1/-2.9 | scratches on the entire surface | 35 |
| * Difference from the initial output (0/7 ch) | | | | | | | | | |

According to the present invention, an MR head used in high density recording devices can be cleaned uniformly and efficiently by specifying the surface roughness and the curvature of the cleaning tape.

**Claims**

1. A cleaning tape for a magneto-resistive head comprising a support and a cleaning layer containing powder and a binder, the cleaning layer being adapted to be brought into contact with the magneto-resistive head,
   the cleaning layer having a centerline average surface roughness Ra of 10 to 60 nm, and
   the cleaning tape having an absolute value of curvature of 3.0 mm or less for a length of 1 m.

2. The cleaning tape according to claim 1 , wherein the magneto-resistive head to be cleaned is for writing and reading signals having a wavelength of 1 $\mu$m or shorter.

3. The cleaning tape according to claim 1, wherein the cleaning layer comprises a nonmagnetic layer and a magnetic layer so that the support, the nonmagnetic layer and the magnetic layer are provided in this order, the magnetic layer containing nonmagnetic powder having an average particle size of 0.3 $\mu$m or smaller and a Mohs hardness of 6 or higher and having a thickness of 0.20 $\mu$m or smaller.

4. The cleaning tape according to claim 3, wherein the nonmagnetic powder contained in the magnetic layer has an average particle size of 0.03 to 0.3 $\mu$m.

5. The cleaning tape according to claim 3, wherein the nonmagnetic powder contained in the magnetic layer has an average particle size of 0.05 to 0.25 $\mu$m.

6. The cleaning tape according to claim 1, wherein the cleaning layer has a centerline average surface roughness Ra of 10 to 45 nm.

7. The cleaning tape according to claim 1 , wherein the cleaning layer has a centerline average surface roughness Ra of 10 to 35 nm.

8. The cleaning tape according to claim 1, wherein the cleaning tape has an absolute value of curvature of 2.5 mm or less for a length of 1 m.

9. The cleaning tape according to claim 1, wherein the cleaning tape has an absolute value of curvature of 2.0 mm or less for a length of 1 m.

10. The cleaning tape according to claim 1, further comprising a backcoat layer containing carbon black and inorganic powder, so that the backcoat layer, the support and the cleaning layer are provided in this order.

**Patentansprüche**

1. Reinigungsband für einen Magnetowiderstandskopf, das einen Träger und eine ein Pulver und ein Bindemittel enthaltende Reinigungsschicht umfasst, wobei die Reinigungsschicht angepasst ist, um mit dem Magnetowiderstandskopf in Kontakt gebracht zu werden,
   wobei die Reinigungsschicht eine durchschnittliche Mittellinien-Oberflächenrauhigkeit (Ra) von 10 bis 60 nm besitzt, und
   das Reinigungsband einen absoluten Krümmungswert von 3,0 mm oder weniger auf eine Länge von 1 m besitzt.

2. Reinigungsband nach Anspruch 1, worin der zu reinigende Magnetowiderstandskopf zum Schreiben und Auslesen von Signalen mit einer Wellenlänge von 1 $\mu$m oder kürzer ist.

3. Reinigungsband nach Anspruch 1, worin die Reinigungsschicht eine nicht-magnetische Schicht und eine magnetische Schicht umfasst, so dass der Träger, die nicht-magnetische Schicht und die magnetische Schicht in dieser Reihenfolge bereitgestellt sind,
   wobei die magnetische Schicht nicht-magnetisches Pulver mit einer durchschnittlichen Teilchengrösse von 0,3 $\mu$m oder weniger und einer Mohs-Härte von 6 oder höher enthält und eine Dicke von 0,20 $\mu$m oder kleiner besitzt.

**4.** Reinigungsband nach Anspruch 3, worin das nicht-magnetische Pulver, das in der magnetischen Schicht enthalten ist, eine durchschnittliche Teilchengrösse von 0,03 bis 0,3 $\mu$m besitzt.

**5.** Reinigungsband nach Anspruch 3, worin das nicht-magnetische Pulver, das in der magnetischen Schicht enthalten ist, eine durchschnittliche Teilchengrösse von 0,05 bis 0,25 $\mu$m besitzt.

**6.** Reinigungsband nach Anspruch 1, worin die Reinigungsschicht eine durchschnittliche Mittellinien-Oberflächenrauhigkeit (Ra) von 10 bis 45 nm besitzt.

**7.** Reinigungsband nach Anspruch 1, worin die Reinigungsschicht eine durchschnittliche Mittellinien-Oberflächenrauhigkeit (Ra) von 10 bis 35 nm besitzt.

**8.** Reinigungsband nach Anspruch 1, worin das Reinigungsband einen absoluten Krümmungswert von 2,5 mm oder weniger auf eine Länge von 1 m besitzt.

**9.** Reinigungsband nach Anspruch 1, worin das Reinigungsband einen absoluten Krümmungswert von 2,0 mm oder weniger auf eine Länge von 1 m besitzt.

**10.** Reinigungsband nach Anspruch 1, das ferner eine Rückseitenbeschichtungsschicht, die Russ und anorganisches Pulver enthält, umfasst, so dass die Rückseitenbeschichtungsschicht, der Träger und die Reinigungsschicht in dieser Reihenfolge bereitgestellt sind.


**Revendications**

**1.** Bande de nettoyage pour une tête magnétorésistive comportant un support et une couche de nettoyage contenant une poudre et un liant, la couche de nettoyage étant adaptée pour être amenée en contact de la tête magnétorésistive, la couche de nettoyage possédant une rugosité de surface moyenne de ligne centrale Ra de 10 à 60 nm, et la bande de nettoyage possédant une valeur absolue de courbure de 3,0 mm ou moins pour une longueur de 1 m.

**2.** Bande de nettoyage selon la revendication 1, dans laquelle la tête magnétorésistive à nettoyer est destinée à l'écriture et à la lecture de signaux possédant une longueur d'onde de 1 $\mu$m ou moins.

**3.** Bande de nettoyage selon la revendication 1, dans laquelle la couche de nettoyage comprend une couche non magnétique et une couche magnétique de sorte que le support, la couche non magnétique et la couche magnétique sont prévus dans cet ordre, la couche magnétique contenant une poudre non magnétique possédant une taille de particule moyenne de 0,3 $\mu$m ou moins et une dureté Mohs de 6 ou plus et présentant une épaisseur de 0,20 $\mu$m ou moins.

**4.** Bande de nettoyage selon la revendication 3, dans laquelle la poudre non magnétique contenue dans la couche magnétique présente une taille de particule moyenne de 0,03 à 0,3 $\mu$m.

**5.** Bande de nettoyage selon la revendication 3, dans laquelle la poudre non magnétique contenue dans la couche magnétique présente une taille de particule moyenne de 0,05 à 0,25 $\mu$m.

**6.** Bande de nettoyage selon la revendication 1, dans laquelle la couche de nettoyage présente une rugosité de surface moyenne de ligne centrale Ra de 10 à 45 nm.

**7.** Bande de nettoyage selon la revendication 1, dans laquelle la couche de nettoyage présente une rugosité de surface moyenne de ligne centrale Ra de 10 à 35 nm.

**8.** Bande de nettoyage selon la revendication 1, dans laquelle la bande de nettoyage possède une valeur absolue de courbure de 2,5 mm ou moins pour une longueur de 1 m.

**9.** Bande de nettoyage selon la revendication 1, dans laquelle la bande de nettoyage possède une valeur absolue de courbure de 2,0 mm ou moins pour une longueur de 1 m.

**10.** Bande de nettoyage selon la revendication 1, comportant en outre une couche de revêtement postérieur contenant du noir de charbon et une poudre inorganique, de sorte que le couche de revêtement postérieur, le support et la couche de nettoyage sont prévus dans cet ordre.

## FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6139531 A
- JP 2003281706 A
- JP 2004095182 A
- JP 2002230727 A
- JP 62256219 A
- JP 6064726 B
- WO 9835345 A